# EUROPEAN PATENT APPLICATION

(11) **EP 4 310 358 A1**
(43) Date of publication of application: **24.01.2024**
(21) Application number: 22185876.4
(22) Date of filing: 19.07.2022
(51) Int. Cl.: F16D 55/224, F16D 55/225

(54) **BRAKE ASSEMBLY FOR BRAKING AT LEAST ONE WHEEL OF A VEHICLE**

(71) Applicant: KNORR-BREMSE Systeme für Nutzfahrzeuge GmbH, 80809 München (DE)
(72) Inventor: ADAMCZYK, Philipp, 82347 Bernried (DE); BLESSING, Michael, 80687 München (DE); GYÖRKE, Zsombor, 8360 Keszthely (HU); HEIGL, Korbinian, 85652 Pliening (DE); HÖS, Levente, 1047 Budapest (HU); HOLLOSI, Mate, 1097 Budapest (HU); KLINGNER, Matthias, 82275 Emmering (DE); KOKREHEL, Csaba, 1119 Budapest (HU); KRÜGER, Sven Philip, 81476 München (DE); MONORI, Gyula, 6065 Lakitelek (HU); NAKAMURA, Tatsuro, 1027 Budapest (HU); PESCHEL, Michael, 82296 Schöngeising (DE); TOTH-KATONA, Tamas, 1039 Budapest (HU); SCHÖFBERGER, Tobias, 84048 Mainburg (DE); SZABO, Janos, 1101 Budapest (HU); TOTH, Janos, 6000 Kecskemét (HU)

(57) **Abstract**

The present invention relates to a brake assembly (1) for braking at least one wheel of a vehicle, comprising:
a brake disc (10) rotatably supported about a rotational axis (R) having a disc center plane (DCP) perpendicular to the rotational axis (R),
a caliper (40) having a caliper plane (CP) extending substantially perpendicular to the disc center plane (DCP) and in parallel to a plane formed by the rotational axis (R) and a direction (y) perpendicular to the rotational axis (R) within the disc center plane (DCP),
at least one brake pad (20a, 20b) arranged in the caliper (40) to face a radial surface side of the brake disc (10) with respect to the rotational axis (R), and
an actuation assembly (30) operatively connected to the at least one brake pad (20a, 20b) to move the at least one brake pad (20a, 20b) toward the radial surface side of the brake disc (10), wherein
the actuation assembly (30) comprises a lever member (32) rotatably supported about a lever turning axis (32') to transfer a rotational movement of the lever member (32) into a translational movement of the at least one brake pad (20a, 20b) toward the brake disc (10), and wherein
the lever turning axis (32') extends in a direction substantially in parallel to the disc center plane (DCP) and substantially perpendicular the caliper plane (CP).

## Description

The present invention relates to a brake assembly for braking at least one wheel of a vehicle and a vehicle comprising such brake assembly.

Today's disc brake assemblies, such as air-disc brake assemblies, create the clamping force to the brake pads via an eccentric lever and a pneumatic actuator. The turning axis of the eccentric lever is arranged in parallel to a horizontal caliper plane and in parallel to the disc center plane. An actuator axis to actuate the eccentric lever is arranged almost perpendicular to the horizontal caliper plane and parallel to the disc center plane, also referred to as radial brake, or almost in parallel to the horizontal caliper plane and almost perpendicular to disc center plane, also referred to as axial brake.

Further, a bridge guidance is generally oriented perpendicular to the disc center plane.

Furthermore, in case of additional parking brake function the actuator has a service brake portion and a parking brake portion. Both are arranged in series and in a common housing.

Due to the current arrangement the brake assembly including the actuator and eccentric lever consumes a significant axial installation space, i.e. along a rotational axis of the brake disc or a wheel axis, respectively, perpendicular to the disc center plane, in case of an axial brake, or radial installation space in case of a radial brake. For example, a radial brake cannot be mounted in 6 o'clock position because the parking brake portion could collide with the road surface. Furthermore, it is not possible to separate the service brake portion and the parking brake portion and arrange one portion on left and one portion on the right side of the eccentric lever due to collision with the rim in case of axial brake or due to collision with axle bodies in case of a radial brake. Furthermore, in case of an axial brake the maximum lever size is limited due to the space between knuckle and rim. Furthermore, in case of a radial brake the minimum lever size is limited due to the wheel width including tires eventually including snow chains and the actuator diameter.

Therefore, it is an object of the present invention to provide a brake assembly for braking at least one wheel of a vehicle and a vehicle comprising such brake assembly capable of providing reduced axial and/or radial installation space.

The object is solved by the subject-matter of the independent claims. Further aspects of the present invention are subject to the dependent claims.

According to the present invention, a brake assembly for braking at least one wheel of a vehicle comprises a brake disc rotatable about a rotational axis having a disc center plane perpendicular to the rotational axis. Further, the brake assembly comprises a caliper having a caliper plane extending substantially perpendicular to the disc center plane and in parallel to a plane formed by the rotational axis and a direction perpendicular to the rotational axis within the disc center plane, and at least one brake pad arranged in the caliper to face a radial surface side of the brake disc with respect to the rotational axis. An actuation assembly of the brake assembly is operatively connected to the at least one brake pad to move the at least one brake pad toward the radial surface side of the brake disc. The actuation assembly comprises a lever member rotatably supported about a lever turning axis to transfer a rotational movement of the lever member into a translational movement of the at least one brake pad toward the brake disc. Further, the lever turning axis extends in a direction substantially in parallel to the disc center plane and substantially perpendicular to the caliper plane.

Due to the arrangement of the lever turning axle in the direction substantially in parallel to the disc center plane and substantially perpendicular to the caliper plane, axial and radial installation space can be reduced. This may particularly apply for brake assemblies comprising a parking brake function. Further, the need of a radial brake, which is mostly used on front axles or so-called portal axles in city bus applications can be avoided. Furthermore, the invention provides a solution to arrange actuators closer to a caliper guidance in order to reduce the dynamic load on the guidance. An arrangement of actuators between the guidance may also be feasible. As another aspect, the invention provides more flexibility to define the lever geometry in order to optimize ratio, progression and hysteresis of brake assemblies.

In a three-dimensional Cartesian coordinate system, the rotational axis may be associated with the x-axis, and the direction perpendicular to the rotational axis within the disc center plane may be associated with the y-axis. Consequently, a direction perpendicular to the x-axis and the y-axis defines the z-axis in the three-dimensional Cartesian coordinate system. With reference to such three-dimensional Cartesian coordinate system, the disc center plane is a plane defined by the y-axis and z-axis or in parallel to such plane. Accordingly, the caliper plane may be a plane defined by the x-axis and y-axis or in parallel to such plane, and may thereby extend perpendicular to the disc center plane. However, since the caliper may be subject to some positional tolerances due to mounting tolerances and other tolerances, the caliper plane may provide some slight deviations from a strict perpendicular arrangement with respect to the disc center plane, which is expressed by the term "substantially perpendicular" with respect to the perpendicular arrangement of the disc center plane and the caliper plane.

With respect to the lever turning axis extending in the direction substantially in parallel to the disc center plane and substantially perpendicular to the caliper plane, the terms "substantially in parallel" and "substantially perpendicular" does also address respective tolerances. Furthermore, the terms "substantially in parallel" and "substantially perpendicular" may also cover slight deviations up to +/- 20°, preferably up to +/- 15°, which may be subject to installation space constraints or the like. Such slight deviations may be applied to adapt the brake assembly design for a specific axle design and/or in accordance with the available installation space. Alternatively or in addition, the slight deviations may be applied to adjust a clamping force direction, for example, to influence a brake pad tilting, radial taper wear or an effective friction radius. Further, collisions may be thereby avoided, if the service brake and parking brake cylinders have different diameters.

In some brake assembly configurations, the caliper plane may be a horizontal caliper plane extending substantially horizontally with respect to the disc center plane being a vertical disc center plane extending substantially vertically.

The lever member of the actuation assembly to move the at least one brake pad toward the brake disc may be an eccentric lever member. In other words, the lever turning axis may be an eccentric lever turning axis.

The actuation assembly being operatively connected to the at least one brake pad to move the at least one brake pad toward the radial surface side of the brake disc may provide a direct or indirect connection. A respective movement of the at least one brake pad may not be initiated in any position of the lever member of the actuation assembly but may only be initiated in certain positions of the lever member. For example, the lever member being operatively connected to the at least one brake pad may be actuated to turn about the lever turning axis. However, the lever member may initiate a movement of the at least one brake pad only after it has been turned by at least a predetermined turning angle in a respective direction. Accordingly, minor unintended movements of the lever member, such as due to vibrations or the like, do not cause an actuation of the at least one brake pad to result in any unintended braking of the brake disc. The term "operatively connected" does therefore comprise a direct connection or indirect connection, e.g. via further intermediate parts, as well as a direct or indirect connection, which provides a position dependent actuation as described, i.e. an actuation that may not be executed in any position of the lever member or the like but only over a predetermined position range of such lever member or the like.

In some embodiments, the brake assembly comprises a bridge member operatively connected to the lever member and configured to transfer the actuation of the lever member on the at least one brake pad, and wherein the bridge member is preferably rotatably supported and guided by a guide member in a direction toward the at least one brake pad.

Similar to the lever member, the bridge member or transfer member, respectively, to transfer the actuation of the lever member on the at least one brake pad may be directly or indirectly connected to the lever member for moving the at least one brake pad. A respective actuation may not be transferred in any position of the bridge member but may only be initiated in certain positions of the bridge member. For example, the bridge member being arranged between the lever member and the at least one brake pad may be actuated by the lever member to move in the direction toward the at least one brake pad. However, the bridge member may initiate a movement of the at least one brake pad only after it has been moved a certain distance in the respective direction. Accordingly, minor unintended movements of the bridge member, such as due to vibrations or the like, do not cause an actuation of the at least one brake pad to result in any unintended braking of the brake disc.

The bridge member may be an intermediate component arranged between the lever member and the at least one brake pad and configured to provide a translational and rotational movement to be transferred on the at least one brake pad upon an actuation due to a rotational movement of the lever member. The translation movement is associated with a movement in the direction of the rotational axis and the rotational movement is associated with a bridge member turning axis substantially in parallel with the lever turning axis. Accordingly, when the lever member is turned to actuate the at least one brake pad toward the brake disc, the bridge member is moved in the direction of the rotational axis of the brake disc toward the brake disc or the at least one brake pad, respectively, and is also turned about the bridge member turning axis. As a result of such turning, the contact point or contact area between the bridge member and the at least on brake pad or the contact point or contact area between the bridge member and a further transfer member arranged between the bridge member and the at least one brake pad is changed during the respective actuation of the bridge member by the lever member. For such rotational movement, the bridge member may be rotatably supported by a guide member, e.g. be being rotatably connected to guide member. The guide member may provide a predetermined pivot as bridge member turning axis in a constant position in the direction of the y-axis with respect to the previously described three-dimensional Cartesian coordinate system, i.e. the direction perpendicular to the rotational axis within the disc center plane. However, the guide member may also provide the pivot as bridge member turning axis to be movable in the y-direction. Alternatively or in addition, the guide member provides an axial guidance in the direction of the rotational axis of the brake disc. The pivot may be fixed in the caliper. For example, when the caliper is configured as a floating caliper, the pivot will be moved along the x-direction due to wear and/or clamping stroke. As an additional effect, the offset of contact point of the brake pad and brake disc will increase with ongoing brake pad and/or brake disc wear

By the bridge member being rotatable about the bridge member turning axis and by the respective shift of the contact point or contact area between the bridge member and the at least on brake pad or the further transfer member, a respective point of a clamping force application is shifted accordingly. Due to shifted point of a clamping force application it becomes possible to reduce taper wear. For example, a single piston design of a brake assembly, which provides a single piston as further transfer member between the bridge member and the at least one brake pad, may cause a tendency to taper wear, mostly in a tangential direction. Such taper wear may cause a full worn condition on one side of the brake pad and an interim worn condition of the other side of the brake pad. Such taper wear may result in a loss for friction and brake power capability but also in an intended reaction force on the brake disc, clamping mechanism, caliper and caliper guidance. In a worst-case scenario, the brake power capability may drop below legal requirements. Since taper wear is associated with a respective torque acting on the at least one brake pad, shifting of the point of a clamping force application due to rotation of the bridge member about the bridge member turning axis allows to create a counter torque and therefore to provide at least a partial torque compensation. Due to the compensation of torque to at least some extent, the risk of taper wear can be reduced.

In some embodiments, the bridge member and/or the guide member is inclined with respect to the rotational axis and/or the direction perpendicular to the rotational axis within the disc center plane, preferably by not more than +/- 20°, more preferably not more than +/- 15°, with the inclination with respect to the rotational axis as a bridge member angle reference.

The bridge member angle reference defines a neutral position of the bridge member as reference. The neutral position is defined by a straight partition of the guidance. The angle or direction, respectively, of such straight partition can be located in the caliper and/or the bridge member. In other words, the neutral position is defined by the brake assembly design, in particular the caliper design. Preferably, the bridge member angle reference with respect to the rotational axis is 0° to 10°, more preferably 0° to 5°. The neutral position of the bridge member upon or shortly before the at least one brake pad is actuated by the bridge member to initially contact the brake disc substantially corresponds to the neutral position with slight deviations up to +/- 2°, preferably up to +/- 1°. Specifically, the bridge member turning axis is positioned such that the previously described counter torque is already created in the neutral position of the bridge member in the event of a respective contact between the at least one brake pad and the brake disc.

In some embodiments, the bridge member and/or the guide member is/are configured to change the inclination from the bridge member angle reference by a bridge member angle with respect to the bridge member angle reference by actuating the bridge member toward the at least one brake pad to provide a clamping force on the at least one brake pad acting with an inclination angle expressed by the sum of the bridge member angle reference and the bridge member angle as effective bridge member angle.

Specifically, the bridge member may not only be configured to provide the counter torque in the neutral position but also to change the counter torque in dependence on the bridge member angle to result in the effective bridge member angle. In particular, since the torque by the frictional force between the at least one brake pad and the brake disc increases with increasing movement of the at least one brake pad toward the brake disc, the bridge member is configured and arranged to increase the effective bridge member angle with increasing actuation of the at least one brake pad toward the brake disc.

In some embodiments, the bridge member is arranged to create a distance of the clamping force impact on the brake disc with respect to the rotational axis in the direction perpendicular to the rotational axis within the disc center plane in at least one position of the bridge member during actuation.

As an example, the brake disc may rotate about the rotational axis in contact with the at least one brake pad. The respective frictional force between the at least one brake pad and the brake disc creates a torque via the axial distance in direction of the rotational axis between a guidance of the at least one brake pad and the contact surface of the at least one brake pad and the brake disc. Such torque may act in a counterclockwise direction around an axis in a direction substantially in parallel to the disc center plane and substantially perpendicular the caliper plane. Due to the bridge member providing an effective bridge member angle as the sum of the bridge member angle reference, which may also be zero, and, depending on the actuation of the bridge member or the turning angle around the bridge member turning axis, respectively, the instantaneous bridge member angle, a distance in the direction perpendicular to the rotational axis within the disc center plane is created between the rotational axis of the brake disc and the point of the clamping force application. Said distance induces a counter torque in a clockwise direction around an axis in a direction substantially in parallel to the disc center plane and substantially perpendicular to the caliper plane to at least partially compensate the torque by the frictional force.

In some embodiments, the brake assembly comprises an actuator assembly comprising an actuator operatively connected to the lever member to actuate the lever member to rotate about the lever turning axis, wherein the brake assembly is configured to change the effective bridge member angle in dependence on the actuation of the lever member by the actuator, preferably according to an actual stroke of the actuator.

Accordingly, the lever member is actuated by the actuator assembly. The actuator assembly may comprise an actuator, such as a piston actuator, to transfer a translational movement of the actuator into a rotational movement of the lever member. However, alternatively or in addition, the actuator may also provide a rotational movement to actuate the lever member or in response to an actuation of the lever member, e.g. to compensate for relative movements. The actuator axis may substantially extend in the direction perpendicular to the rotational axis within the disc center plane or at least with a main direction component of a respective actuation movement.

In some embodiments, the brake assembly comprises at least one piston arranged between the lever member and the at least one brake pad, preferably between the bridge member as previously described and the at least one brake pad, and configured to transfer an actuation of the lever member on the at least one brake pad.

In a single piston design, i.e. a brake assembly with only one piston arranged between the lever member and the at least one brake pad, the number of components is reduced, which may allow reduction in required installation space and costs. Even though as single piston design may be particularly prone to taper wear, the taper wear tendencies may be sufficiently compensated in combination with the bridge member providing a shifted clamping force impact in at least one actuation position.

However, a configuration with two or more pistons acting on one brake pad may allow a better pressure distribution to further reduce the risk of taper wear.

In some embodiments, the actuation assembly is at least partially arranged within the caliper.

The actuation assembly may comprise the lever member, the bridge member with or without the guide member and the actuator assembly. Due to the arrangement of the lever turning axis in the direction substantially in parallel to the disc center plane and substantially perpendicular to the caliper plane, at least the lever member can be partially arranged within the caliper to provide a compact brake assembly device. Besides the compact design, respective components of the actuation assembly arranged within the caliper may be protected against external impact. However, the actuator mechanism may be at least partially arranged outside the caliper.

In some embodiments, the caliper is a floating caliper.

Due to the floating caliper principle, a second clamping mechanism on the opposed side of the brake disc, e.g. on the outboard side, may be avoided. Due to installation space reasons a sufficient mechanism, including actuation, may not be possible. A transmission of actuation force around the brake disc may also not be applicable. Furthermore, a fixed caliper has to balance both clamping sides. Due to small clearance deviations, hysteresis and the like, the clamping force on both sides could become different on outboard and inboard side.

In another aspect, the present invention relates to a vehicle comprising a brake assembly as previously described, wherein the vehicle is a commercial vehicle and/or an electrically powered or hybrid vehicle.

For example, the commercial vehicle may be a truck, a trailer, a bus and/or a combination of a towing vehicle and a trailer. Commercial vehicles and electrically powered or hybrid vehicles provide severe installation space constraints, which benefit from the previously described brake assembly.

Further advantages, aspects and details of the invention are subject to the claims, the following description of exemplary embodiments applying the principles of the invention, and the respective exemplary drawings.
**Figure 1** is a schematic view of a section of a brake assembly according to an exemplary embodiment of the present invention viewed in a z-direction;
**Figure 2** is a schematic view of the brake assembly according to Figure 1 viewed in a y-direction and showing a brake caliper; and
**Figure 3** is a schematic view of the brake assembly according to Figure 1 viewed in a x-direction.

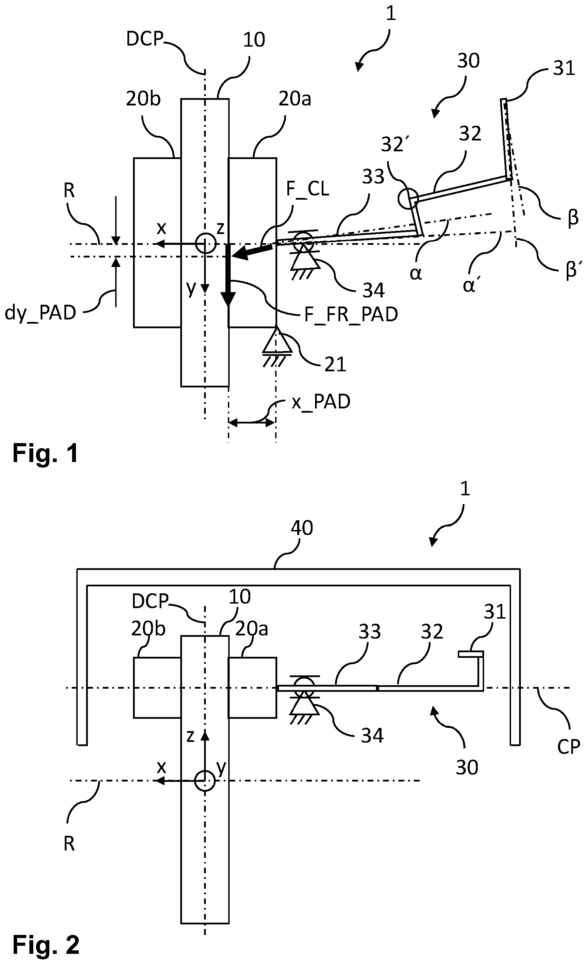

**Figure 1** shows a schematic view of a section of a brake assembly 1 according to an exemplary embodiment of the present invention viewed in a z-direction. The brake assembly 1 comprises two brake pads 20a, 20b, each of which is arranged on a radial surface side with respect to a rotational axis R of a brake disc 10 about which the brake disc 10 is rotatable. In the exemplary embodiment, the brake pad 20a is an inboard brake pad arranged on a radial surface side of the brake disc 10 facing toward an inner side of a vehicle if the brake assembly 1 is mounted thereto, while the brake pad 20b is an outboard brake pad arranged on a radial surface side of the brake disc 10 facing away from the inner side of the vehicle. The inboard brake pad 20a and the outboard brake pad 20b are arranged in a brake caliper 40 (Figure 2). According to a Cartesian coordinate system as shown in Figure 1, a disc center plane DCP, which extends in the radial direction with respect to the rotational axis R of the brake disc through the center of the brake disc 10, is a plane defined by a y-axis and a z-axis. The rotational axis R of the brake disc 10 extends in a direction of the x-axis. The braking surfaces of the inboard brake pad 20a and the outboard brake pad 20b are arranged in parallel to the disc center plane DCP and are facing the respective radial surface sides of the brake disc 10. The brake caliper 40 provides a caliper plane CP, which is perpendicular to the disc center plane DCP and in parallel to a plane formed by the rotational axis R and a direction perpendicular to the rotational axis R within the disc center plane DCP. In other words, here, the caliper plane CP is defined by the x-axis and y-axis.

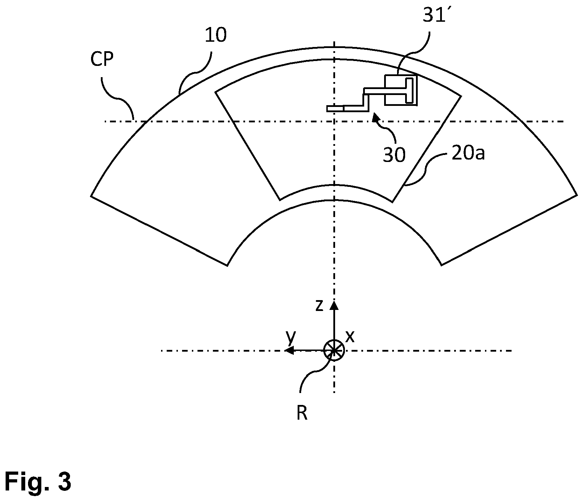

Further, the brake assembly comprises an actuation assembly 30 to move the inboard brake pad 20a in the direction of the rotational axis R toward the brake disc 10 and to provide a clamping force F_CL to brake the brake disc 10 based on a resulting frictional force F_FR_PAD. Since the brake caliper 40 in the exemplary embodiment is a floating caliper, it is sufficient to actuate the inboard brake pad 20a to move toward the brake disc 10 as the brake caliper 40 as floating caliper transfers a respective movement on the outboard brake pad 20b in a known manner. The actuation assembly 30 comprises an actuator assembly 31' (Figure 3) comprising an actuator 31, a lever member 32 with a lever turning axis 32', a bridge member 33 and a guide member 34 for the bridge member 33. The lever turning axis 32' extends in a direction in parallel to the disc center plane DCP and perpendicular to the caliper plane CP. Accordingly, the lever turning axis 32' extends in the z-axis direction. However, in alternative embodiments, the lever turning axis may be inclined with respect to the direction in parallel to the disc center plane DCP and perpendicular to the caliper plane CP or the z-axis direction, respectively, in a direction of the rotational axis R or x-axis direction, respectively, and/or the direction perpendicular to the rotational axis R within the disc center plane DCP or y-axis direction, respectively, preferably by up to +/- 20°, more preferably by up to +/- 15°.

The lever member 32 in the exemplary embodiment is an eccentric lever member or provides an eccentric lever axis, respectively. The lever member 32 is driven by a translational movement of the actuator 31 to turn around the lever turning axis 32'. However, in alternative embodiments, the actuator 31 may provide a rotational movement to drive the lever member 32 to turn around the lever turning axis 32'. With respect to the translational movement of the actuator 31, the actuator extends in a reference position, i.e. before actuating the lever member 32 to provide a clamping force F_CL for the inboard brake pad 20a, with an actuator member angle reference β, which is an angle between the direction perpendicular to the rotational axis R within the disc center plane DCP or y-axis direction, respectively, and the translational moving direction of the actuator 31. Since the actuator 31 is operatively connected to the lever member 32, here by a physical connection therebetween, the actuator member angle reference β changes to an instantaneous actuator angle β' during actuation of the lever member 32 by the actuator 31 to provide a clamping force F_CL for the inboard brake pad 20a. Accordingly, the actuator 31 and/or the actuator assembly 31' is at least to some extent rotationally supported to allow a respective relative movement.

The rotational movement of the lever member 32' upon actuation by the actuator 31 is transferred on the inboard brake pad 20a by the bridge member 33 arranged between the lever member 32 and the inboard brake pad 20a in the axial direction with respect to the rotational axis R. The bridge member 33 is operatively connected to the lever member 32, here by a physical connection. Further, the bridge member 33 is rotatably connected to the guide member 34, which guides the bridge member in the axial direction with respect to the rotational axis R or direction to provide a clamping force for braking the brake disc 10, respectively, here the x-axis direction. The bridge member turning axis as being rotatably supported by the guide member 34 extends in a direction in parallel to the disc center plane DCP and perpendicular to the caliper plane CP. Accordingly, the bridge member turning axis extends in the z-axis direction. However, in alternative embodiments, the lever turning axis may be inclined with respect to the direction in parallel to the disc center plane DCP and perpendicular to the caliper plane CP or the z-axis direction, respectively, in a direction of the rotational axis R or x-axis direction, respectively, and/or the direction perpendicular to the rotational axis R within the disc center plane DCP or y-axis direction, respectively, preferably by up to +/- 20°, more preferably by up to +/- 15°. In a reference position of neutral position of the bridge member 33, in which the bridge member 33 is not actuated by the lever member 32 to provide a clamping force F_CL, the bridge member 33 provides a bridge member angle reference α, which corresponds to the angle between the rotational axis R and the bridge member extension between the lever member 32 and the inboard brake pad 20a in the direction perpendicular to the rotational axis R within the disc center plane DCP. During actuation of the bridge member 33 by the lever member 32, the bridge member angle reference α changes to an instantaneous bridge member angle α' due to the rotational movement of the bridge member 33.

To apply a clamping force F_CL to brake the disc 10, the actuator 31 is moved toward the rotational axis R, which corresponds to main movement in the y-axis direction. Accordingly, the L-shaped lever member 32 is turned clockwise about the lever turning axis 32', wherein the leg portion of the lever member between the L-bend and the bridge member 33 actuates the bridge member 33 to move toward the inboard brake pad 20a by a translational movement in direction of the rotational axis R and a rotational movement in a clockwise direction guided by the guide member 34.

The clamping force F_CL applied by the above actuation results in a frictional force F_FR_PAD by the inboard brake pad 20a. The frictional force F_FR_PAD creates a resulting frictional torque T_RES_PAD_FR counterclockwise about a z-axis direction via a distance x-PAD between a brake pad guidance of the inboard brake pad 20a and the contact surface between the inboard brake pad 20a and the brake disc 10. The torque T_RES_PAD_FR may result in taper wear. However, according to the previously described configuration of the brake assembly 1, due the inclined bridge member 33 in accordance with the bridge member angle reference α, the clamping force F_CL is acting with an inclination angle or effective bridge member angle as the sum of the bridge member angle reference α and the instantaneous bridge member angle α' and creates a distance dy_PAD between the rotational axis R and the clamping force impact on the brake disc 10 in the direction perpendicular to the rotational axis R within the disc center plane DCP. Accordingly, a counter torque or resulting clamping torque T_RES_PAD_CL acts clockwise around the z-axis direction. The resulting clamping torque T_RES_PAD_CL at least partially compensates the resulting frictional torque T_RES_PAD_FR. Since the effective bridge member angle is the sum of the bridge member angle reference α and the instantaneous bridge member angle α', the effective bridge member angle and therefore dy_PAD change depending on the stroke of the actuator 31. The effect of influencing the taper wear tendency will be affected as well depending on the stroke which depends on the input force F_ACT. Further, the compensation effect of taper wear will increase if a higher input force and due to that a higher torque demand is applied. If wear of the inboard brake pad 20a appears as proportional reduction dy and dx with respect to braking surface wear, the resulting frictional torque T_RES_PAD_FR and resulting clamping torque T_RES_PAD_CL are proportionally reduced as well.

**Figure 2** shows a schematic view of the brake assembly 1 according to Figure 1 viewed in the y-direction and showing the brake caliper 40. The brake caliper 40 provides the caliper plane CP, which extends perpendicular to the disc center plane DCP and in parallel to a plane formed by the rotational axis R and a direction perpendicular to the rotational axis R within the disc center plane DCP or being here defined by the x-axis and y-axis. In the shown configuration the caliper plane CP extends in parallel to a horizontal ground with the disc center plane extending vertically. Accordingly, such configuration provides the caliper plane CP as horizontal caliper plane. According to Figure 2, the actuation assembly 30 is at least partially arranged within the brake caliper 40. Specifically, the lever member 32, the bridge member 33, and the guide member 34 are accommodated in a space provided by the brake caliper 40. Further, the actuator 31 extends in the respective space within the brake caliper 40 to actuate the lever member 32. However, in the exemplary embodiment a driving mechanism of the actuator assembly 31' to drive the actuator 31 is placed outside the brake caliper 40.

**Figure 3** shows a schematic view of the brake assembly 1 according to Figure 1 viewed in the x-direction. The schematically illustrated actuator assembly 31' comprises the actuator 30 as piston actuator. The actuator assembly 31' is configured to actuate the lever member 32 to apply a clamping force F_CL for service brake events as well as for parking brake events.

The invention has been described with respect to an exemplary embodiments. However, the invention is not limited to the exemplary embodiments.

### LIST OF REFERENCE SIGNS

- 1: brake assembly
- 10: brake disc
- 20a: brake pad (inboard)
- 20b: brake pad (outboard)
- 21: brake pad guidance
- 30: actuation assembly
- 31: actuator
- 31': actuator assembly
- 32: lever member
- 32': lever turning axis
- 33: bridge member
- 34: guide member
- 40: brake caliper
- CP: caliper plane
- DCP: disc center plane
- dy_PAD: clamping force impact shift
- F_CL: clamping force
- F_FR_PAD: frictional force
- R: rotational axis (brake disc)
- x_PAD: distance between brake pad guidance and braking surface
- α: bridge member angle reference
- α': bridge member angle
- β: actuator angle reference
- β': actuator angle
- x: x-axis direction (Cartesian coordinate system)
- y: y-axis direction (Cartesian coordinate system)
- z: z-axis direction (Cartesian coordinate system)

## Claims

1. Brake assembly (1) for braking at least one wheel of a vehicle, comprising:
a brake disc (10) rotatable around a rotational axis (R) having a disc center plane (DCP) perpendicular to the rotational axis (R),
a caliper (40) having a caliper plane (CP) extending substantially perpendicular to the disc center plane (DCP) and in parallel to a plane formed by the rotational axis (R) and a direction (y) perpendicular to the rotational axis (R) within the disc center plane (DCP),
at least one brake pad (20a, 20b) arranged in the caliper (40) to face a radial surface side of the brake disc (10) with respect to the rotational axis (R), and
an actuation assembly (30) operatively connected to the at least one brake pad (20a, 20b) to move the at least one brake pad (20a, 20b) toward the radial surface side of the brake disc (10), wherein
the actuation assembly (30) comprises a lever member (32) rotatably supported about a lever turning axis (32') to transfer a rotational movement of the lever member (32) into a translational movement of the at least one brake pad (20a, 20b) toward the brake disc (10), and wherein
the lever turning axis (32') extends in a direction (z) substantially in parallel to the disc center plane (DCP) and substantially perpendicular to the caliper plane (CP).

2. Brake assembly (1) according to claim 1, wherein the brake assembly (1) comprises a bridge member (33) operatively connected to the lever member (32) and configured to transfer the actuation of the lever member (32) on the at least one brake pad (20a, 20b), and wherein the bridge member (33) is preferably rotatably supported and guided by a guide member (34) in a direction toward the at least one brake pad (20a, 20b).

3. Brake assembly (1) according to claim 2, wherein the bridge member (33) and/or the guide member (34) is inclined with respect to the rotational axis (R) and/or the direction (y) perpendicular to the rotational axis (R) within the disc center plane (DCP), preferably by not more than +/- 20°, more preferably not more than +/- 15°, with the inclination with respect to the rotational axis (R) as a bridge member angle reference (α).

4. Brake assembly (1) according to claim 3, wherein the bridge member (33) and/or the guide member (34) is/are configured to change the inclination from the bridge member angle reference (α) by a bridge member angle (α') with respect to the bridge member angle reference (α) by actuating the bridge member (33) toward the at least one brake pad (20a, 20b) to provide a clamping force on the at least one brake pad (20a, 20b) acting with an inclination angle expressed by the sum of the bridge member angle reference (α) and the bridge member angle (α') as effective bridge member angle.

5. Brake assembly (1) according to claim 3 or 4, wherein the bridge member (33) is arranged to create a distance of the clamping force impact on the brake disc (10) with respect to the rotational axis (R) in the direction (y) perpendicular to the rotational axis (R) within the disc center plane (DCP) in at least one position of the bridge member (33) during actuation.

6. Brake assembly (1) according to claim 4 or 5, wherein the brake assembly (1) comprises an actuator assembly (31') comprising an actuator (31) operatively connected to the lever member (32) to actuate the lever member (32) to rotate around the lever turning axis (32'), wherein the brake assembly (1) is configured to change the effective bridge member angle in dependence on the actuation of the lever member (32) by the actuator (31), preferably according to an actual stroke of the actuator (31).

7. Brake assembly (1) according to any of the preceding claims, wherein the brake assembly (1) comprises at least one piston arranged between the lever member (32) and the at least one brake pad (20a, 20b), preferably between the bridge member (33) according to any one of the claims 2 to 6 and the at least one brake pad (20a, 20b), and configured to transfer an actuation of the lever member (32) on the at least one brake pad (20a, 20b).

8. Brake assembly (1) according to any one of the preceding claims, wherein the actuation assembly (30) is at least partially arranged within the caliper (40).

9. Brake assembly (1) according to any one of the preceding claims, wherein the caliper (40) is a floating caliper.

10. Vehicle comprising a brake assembly (1) according to any one of the claims 1 to 10, wherein the vehicle is a commercial vehicle and/or an electrically powered or hybrid vehicle.
